# EUROPEAN PATENT SPECIFICATION

(11) **EP 2 942 179 B1**
(45) Date of publication and mention of the grant of the patent: **30.08.2017**
(21) Application number: 15164317.8
(22) Date of filing: 20.04.2015
(51) Int. Cl.: B29C 49/56

(54) **MACHINE FOR THE BLOW-MOLDING OR STRETCH BLOW-MOLDING OF BOTTLES IN A POLYMERIC MATERIAL**
MASCHINE ZUM BLASFORMEN ODER DEHNEN ODER DEHN-BLASFORMEN VON FLASCHEN IN EINEM POLYMERMATERIAL
MACHINE POUR LE MOULAGE PAR SOUFFLAGE OU LE MOULAGE PAR ÉTIRAGE-SOUFFLAGE DE BOUTEILLES DANS UN MATÉRIAU POLYMÈRE

(30) Priority: 09.05.2014 IT MI20140845
(43) Date of publication of application: 11.11.2015
(73) Proprietor: SMI S.p.A., 24121 Bergamo (IT)
(72) Inventor: Salvi, Giorgio, I-24121 Bergamo (IT)
(74) Representative: Long, Giorgio

(56) References cited:
- EP-A1- 1 980 386
- FR-A1- 2 856 334
- FR-A1- 2 863 930

## Description

The present invention relates to a machine for the blow-molding or stretch blow-molding of preforms in a polymeric material suitable to convert said preforms in bottles or containers and in particular the closure mechanism of the forming semi-moulds.

Obtaining bottles or containers by blow-molding of suitable preforms which are suitably heated inside a mould having the desired shape is a widely used technique in the packaging field, in particular for manufacturing bottles or containers.

There are essentially two different techniques, the simple blow-molding and the stretch blow-molding, which provides for the pneumatic blow-molding and the simultaneous mechanical stretching of the preform into the mould. In both cases, the preforms have to reach the blow-molding or stretch blow-molding machine in a thermal condition corresponding to the softening point of the material, so as to be able to be plastically deformed inside the moulds.

Machines for blow-molding or stretch blow-molding preforms are known, comprising a plurality of openable moulds comprising two half shells hinged at an end and actuated by leverages suitably arranged and dimensioned to allow opening and closing thereof in a synchronized manner with preset loading steps of the preforms and unloading steps of the already formed bottle. Such leverages are generally actuated by a shaped cam coupling, said coupling being suitable to provide an alternate motion with a trend which is preset by the shape of the cam itself.

In the rotary machines, a plurality of moulds is radially arranged about a central rotation axis and the means for opening and closing the moulds are synchronized with the movement of other devices which cooperate in the operation of the machine, for example, a device for moving the entering preforms and the exiting bottles in, or a blow-molding and moving device of different components of the moulds.

Each mould comprises two half shells, hinged about a hinge axis parallel to the rotation axis of the machine, which can be closed or opened in a synchronized manner by an actuation device which is actuated by a cam coupling.

During the blow-molding of the preform, the pressure of the fluid, generally air, inside the preform and thus inside the mould, exerts an opening force thereon, which tends to open it and unalign the contour edges of the half shells, resulting in a production of an imperfect bottle in which the division line between the half shells remains well visible.

A known technique to obviate this problem provides for the use of a lock suitable to be slidably inserted in peripheral passages obtained at and end of the moulds that is opposite the hinge axis, which, once the mould is closed, are mutually aligned, allowing the lock to be inserted into the passages and holding the mould in the closed configuration during the blow-molding. Such lock has thus to be inserted in the passages before the blow-molding in order to keep the half shells closed, and extracted after the blow-molding to allow the subsequent opening. Such lock is actuated automatically by a corresponding follower, which engages on a different cam from the one that actuates the opening and closure of the pliers.

While solving the problem of keep the half shell closed, the presence of the lock involves a slowing down of the production chain, since the sliding thereof in the aligned passages is significantly time-consuming.

FR 2856334 A1 discloses a machine for the blow-molding or stretch blow-molding of bottles or containers in a polymeric material, having a plurality of moulds which are movable on a transport system and which comprise two half shells hinged at an end and dimensioned to allow opening and closing thereof.

A moulding device for the production of thermoplastic containers comprising two hinged valves that move relative to one another as they open and close is also described by FR 2863930 A1 and EP 1980386 A1.

The problem addressed by the present invention is to provide a machine for the blow-molding or stretch blow-molding of bottles in a plastic material, which allows overcoming the above-mentioned drawbacks.

Such problem is solved by a machine as defined in the appended claims, the definitions of which are an integral part of the present description.

Further characteristics and advantages of the present invention will be more clearly understood from the description of some embodiments, given herein below by way of illustrative, non-limiting example, with reference to the following figures:
Fig. 1 shows a perspective view of a mould for blow-molding or stretch blow-molding containers according to the invention;
Fig. 2 shows a different top perspective view of the mould of Fig. 1 in which the actuating cam of the locking system is shown;
Fig. 2A shows a top perspective view of the mould of Fig. 1 in an open condition;
Fig. 3 shows a simplified, exploded perspective view of the mould of Fig. 1;
Fig. 4 shows a top sectional view of a detail of the mould of Fig. 1;
Fig. 5 shows a top plan view of the mould of Fig. 1 in an open condition;
Fig. 6 shows a top partial sectional view of the detail of Fig. 4 according to a different embodiment.

With reference to the figures, with the number 1 a mould for the injection forming of a container in blow-molding or stretch blow-molding machines is indicated. Typically, a blow-molding or stretch blow-molding machine according to the invention is of the rotary type and comprises a plurality of moulds 1 radially arranged with respect to a substantially vertical rotation axis of the machine.

Each mould 1, by rotating about the rotation axis of the machine, is cyclically brought to a loading station of a preform and/or an unloading station of a bottle obtained from the preform. Between the loading of the preform and the unloading of the bottle, the blow-molding or stretch blow-molding is carried out.

Each mould 1 comprises a first half shell 2a and a second half shell 2b hinged about a hinge axis 3, typically parallel to the rotation axis of the machine. The hinge axis 3 is arranged at a side end of the half shells 2a, 2b facing the machine axis, while the half shells 2a, 2b comprise edges 9a, 9b at the other end, which are intended to face when the mould 1 is closed.

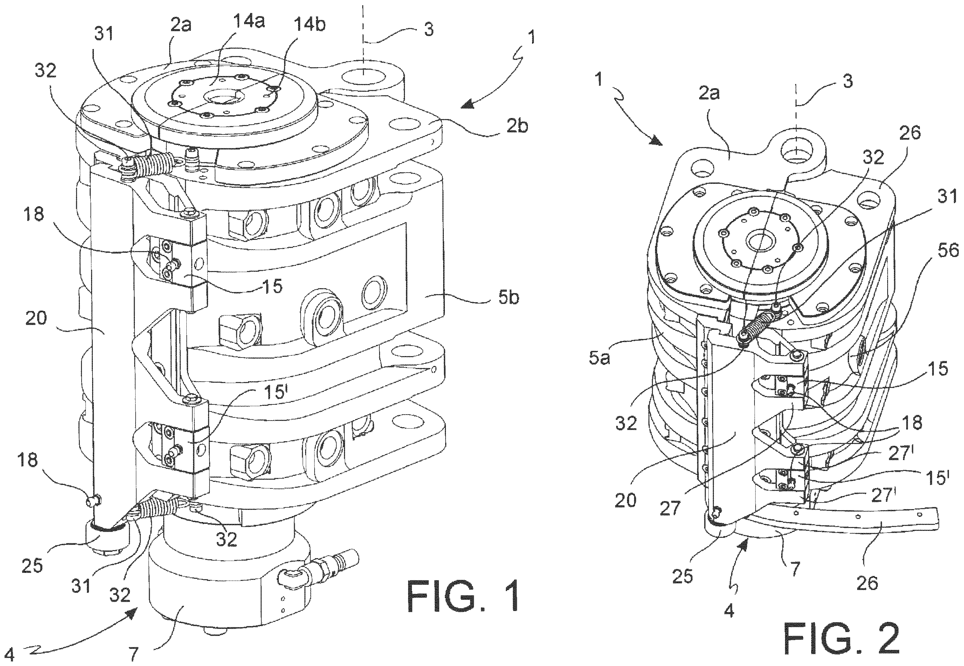

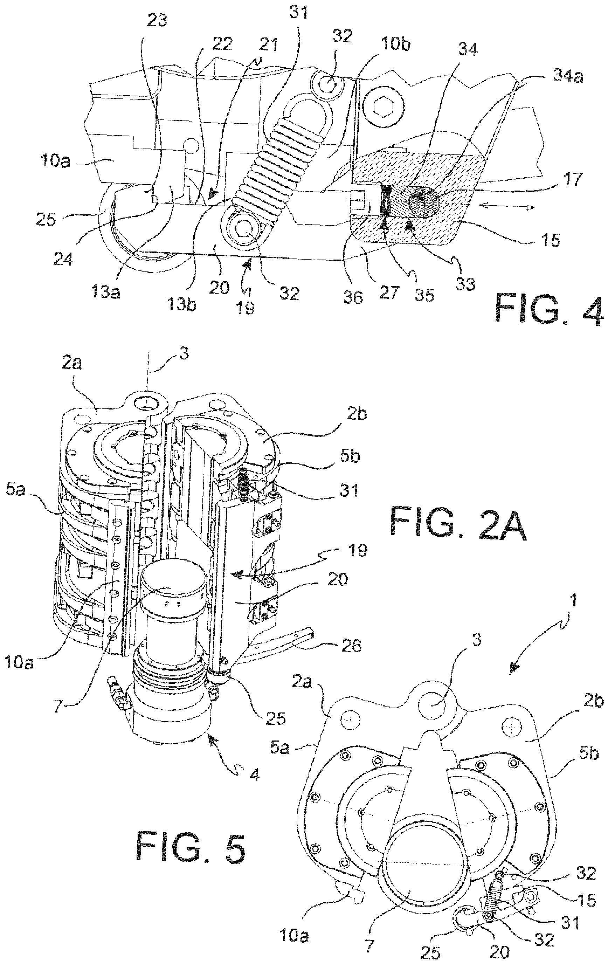

The first half shell 2a and the second half shell 2b can thus rotate about the hinge axis 3 between a closed mould configuration (Figs. 1 and 2) and an open mould configuration (Figs. 2A and 5). The half shells 2a, 2b, can thus be opened/closed like two shells of a bivalve shell.

The mould 1 comprises a base 4 suitable to cooperate with the half shells 2a, 2b for closing the mould 1 bottom, and vertical/translational moving means of the base, to cyclically form a closed cavity suitable to receive a pre-heated preform and allow the expansion by blow-molding or stretch blow-molding of the preform into the cavity in order to obtain a bottle or container.

Advantageously, the half shells 2a, 2b and the base 4 are actuated by half shell opening/closing means and base moving means in a synchronized manner starting from a single inlet of the motion comprising a single cam coupling.

The half shells 2a, 2b respectively comprise an outer face 5a, 5b and an inner face 6a, 6b. respective shaped portions 14a, 14b are applied to the inner faces 6a, 6b, which shaped portions, when considered as a whole once the mould has been closed, repeat in negative the outer shape of the bottle to be obtained from the preform and defining the space within which the preform is expanded.

In certain embodiments, such shaped portion can be divided from the half shells 2a, 2b and is interchangeable, so as to allow forming bottles having different shapes and dimensions. In such a manner, it is sufficient to replace the shaped portions to start producing different bottles.

The half shells 2a, 2b comprise a bottom opening at a bottom portion of the bottle to be obtained, said opening being suitable to be alternately closed by the above-mentioned base 4.

The base 4 comprises a plate 7 vertically translatable by automatic moving means (not shown) between a lower opening position and an upper closure position.

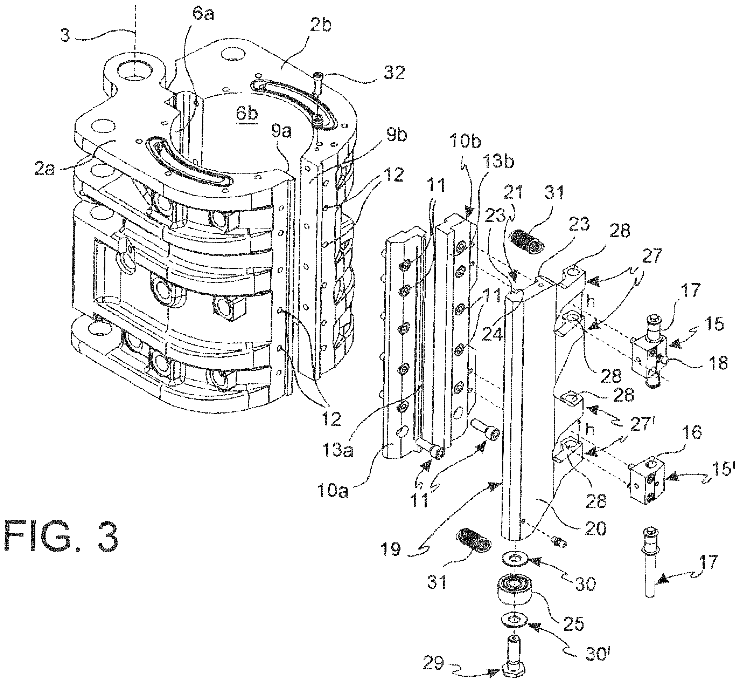

As shown in Fig. 3, abutment profiles 10a, 10b are applied on the edges 9a, 9b of the corresponding half shells 2a, 2b.

In preferred embodiments, the abutment profiles 10a, 10b are secured by screws 11 insertable in corresponding threaded holes 12 whic are present on the half shells 2a, 2b, in the proximity of the edges 9a, 9b. In this manner, the abutment profiles 10a, 10b are removable and can be changed in case of wear.

The abutment profiles 10a, 10b have the surface facing the half shells 2a, 2b having a shape matching that of the corresponding edges 9a, 9b, while the outwardly facing surface has a vertical rib 13a, 13b.

A closure member 19 of the mould 1 is rotatably mounted on one of the two half shells 2a, 2b (in the example of the figures, on the right half shell 2b), which is suitable to keep the half shells 2a, 2b together during the blow-molding or stretch blow-molding process.

The closure member 19 comprises a body 20 having a C-shaped profile 21 facing the abutment profiles 10a, 10b. More particularly, the C-shaped profile 21 comprises a planar bottom surface 22 and two side teeth 23 arranged at such a distance so that the respective inner side surfaces 24 are arranged outside the ribs 13a, 13b with a reduced clearance, so as to prevent the opening of the half shells. For example, the clearance can be 0.15 mm on each side.

A driving wheel 25 is mounted idle on the lower surface of the body 20, which is intended to interact with a cam profile 26 (figs. 2 and 2A) for moving the closure member 19 between a half shell locking position and an unlocking position. As shown in Fig. 3, the driving wheel 25 can be mounted by a suitable screw pin 29 and sandwiching bushes 30, 30'.

In preferred embodiments, the cam profile 26 is part of a rocker cam.

From the body 20 two pairs of arms 27, 27' laterally branch, in which the arms of each pair are separated by a space h and comprise corresponding vertically aligned through holes 28.

At the end of the assembling of the closure member 19, hinge members 15, 15' are secured on the left profile 10b. In the example of the figures, are two hinge members 15, 15' are present, but, in different embodiments, they could also be three or more, or just one.

In certain embodiments, the hinge members 15, 15' are secured to the outer surface of the abutment profile 10b by a screw system 18.

Each of the hinge members 15, 15' comprises a through hole 16 arranged vertically and suitable to house a pin 17. When the closure member 19 is mounted on the abutment profile 10b, the corresponding holes 28 and the holes 16 of the hinge member 15, 15' are aligned, and the pin 17 is passed therethrough, thus obtaining a hinge which allows the rotation of the closure member about the axis of the pin 17.

Respective return springs 31 are associated to the upper and lower surfaces of the body 20 of the closure member 19. The return springs 31 comprise, at the two ends thereof, loops which allow the free coupling thereof with the body 20 at an end and with the corresponding half shell 2b at the other end. Such coupling can be obtained by suitable pin screws 32 (in Fig. 3 only one is shown for the sake of simplicity). The springs 31 allow the return of the closure member 19, thus always maintaining the driving wheel 25 in contact with the cam profile 26.

The closure member 19 comprises a thrust member 33 suitable to push the C-shaped profile 21 toward the rotation fulcrum of the closure member 19.

As shown in the section of Fig. 4, the hinge member 15, 15' comprises a cavity extending perpendicularly to the through hole 16 and in a substantially tangential direction with respect to the outer surface of the abutment profile 10b. Such cavity houses a thrust member 33 which comprises a thrust element 34 insisting on a cup-shaped spring 35. On the opposite face of the cup-shaped spring 35 a closure and adjusting member 36 is arranged, for example, a screw system. The closure and adjusting member 36 has both the function of closing the cavity and adjusting the pretensioning of the cup-shaped spring 35.

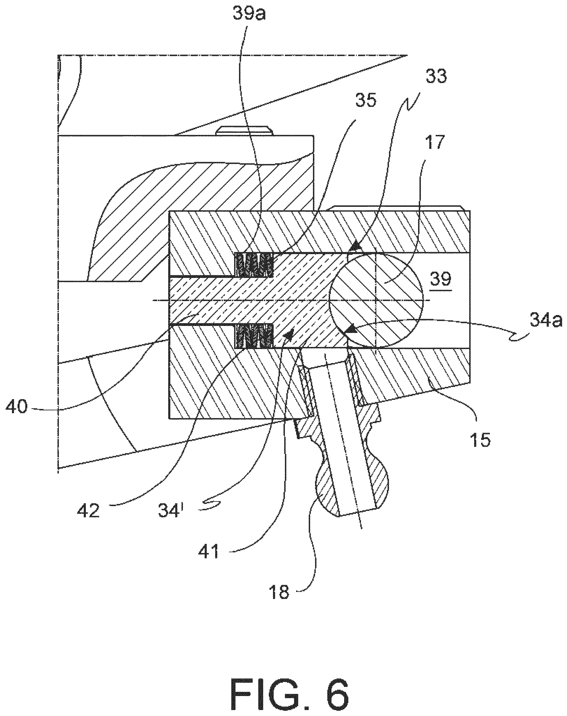

In a different embodiment, shown in Fig. 6, the cavity in which the thrust member 33 is inserted is a through hole 39 in which a thrust element 34' with profile with a T-shaped section is introduced, so as to comprise a first portion 40 with a lesser diameter and a second portion 41 with a larger diameter, connected by a shoulder 42.

The through hole 39 in turn has a narrowed section, in which the first portion 40 of the thrust element 34' inserts, and an enlarged section in which the second portion 41 of the thrust element 34' is housed, in which the two sections form a shoulder 39a.

The cup-shaped spring 35 is perforated and is mounted on the first portion 40 with a lesser diameter of the thrust element 34', so as to insist on the shoulder 42 of the latter and on the shoulder 39a of the through hole 39.

The thrust element 34, 34' has an end 34a in contact with the pin 17, said end 34a having semicylindrical shape so as to couple with the outer surface of the pin 17.

The thrust member 33 has the function to keep the pin 17 pushed against the right stop of the cavity. Consequently the inner side surface 24 of the left tooth 23 of the closure member 19 remains in abutment against the rib 13a of the abutment profile 10a, thus opposing, during the blow-molding step, the forces inside the mould 1 which tend to open the half shells 2a, 2b. In this manner, it is possible to obtain the C-shaped profile 21 with a larger clearance than that conventionally required by the locks (0.15 mm for each side against the centesimal clearance of the prior art locks), with consequent construction simplification and lesser costs.

In other embodiments (not shown), the thrust member 33, as defined above, is associated to the arms 27, 27' or to a conjunction portion of said arms 27, 27' with said body 20 and has the same function to push the C-shaped profile 21 toward and tangentially to the half shell 10b on which the closure member 19 is mounted, for the object mentioned above.

Other advances of the solution which is the object of the present invention are as follows:
- possibility to use a rocker cam instead of a follower cam;
- the reduction of the closure stroke compared to the conventional lock system, which requires that the lock slide inside the aligned holes. On the contrary, in the device of the invention the closure member 19 has to be subjected to a minimum rotation to pass from the locking position to the opening position. This leads to a reduction of the closure/opening times in favor of the blow-molding step, taking into consideration the fact that the entire production cycle has to be carried out within the reduced time of the carousel rotation;
- elimination of the flexure component acting in the lock in the conventional systems, which is often critical in the case of fatigue stresses.

It is apparent that only some particular embodiments of the present invention have been described, to which those skilled in the art will be able to make all the modification that are necessary for the adaptation thereof to particular applications, without for this departing from the protection scope of the present invention.

## Claims

1. A machine (1) for the blow-molding or stretch blow-molding of bottles or containers in a polymeric material having a plurality of moulds (1) that are movable on a transport system, wherein each of said moulds (1) comprises a first half shell (2a) and a second half shell (2b) hinged about a hinge axis (3), at the end opposite to said hinge axis, said half shells (2a, 2b) having an edge (9a 9b), wherein said edges (9a, 9b) comprise abutment profiles (10a, 10b), the outwardly facing surface of said abutment profiles (10a, 10b) comprising a vertical rib (13a, 13b), wherein on one of the two half shells (2a, 2b) is rotatably hinged a closure member (19) of the mould (1), suitable to keep the half shells (2a, 2b) joined during the blow-molding or stretch blow-molding process, the closure member (19) comprising a body (20) having a C-shaped profile (21) facing the abutment profiles (10a, 10b) so as to laterally contain said vertical ribs (13a, 13b), wherein said closure member (19) is hinged on said abutment profile (10b) by one or more hinge members (15, 15'), **characterized in that** each of the hinge members (15, 15') comprises a through hole (16) arranged vertically and suitable to house a pin (17) and a cavity extending perpendicularly to the through hole (16) and in a substantially tangential direction with respect to the abutment profile (10b) outer surface, wherein said cavity houses a thrust member (33) suitable to keep said pin (17) pushed against the walls of said through hole (16).

2. The machine according to claim 1, wherein said C-shaped profile (21) comprises a planar bottom surface (22) and two side teeth (23) arranged at such a distance so that the respective inner side surfaces (24) are arranged exteriorly to the ribs (13a, 13b) with a reduced clearance, so as to prevent the half shells (2a, 2b) from being opened.

3. The machine according to claim 1 or 2, wherein a driving wheel (25) is mounted idle on the body (20) lower surface, the driving wheel (25) being intended to interact with a cam profile (26) for moving the closure member (19) between a half shell locking position and a half shell unlocking position.

4. The machine according to claim 3, wherein the cam profile (26) is part of a rocker cam .

5. The machine according to any of the claims 1 to 4, wherein said closure member (19) comprises a thrust member (33) suitable to push the C-shaped profile (21) toward and tangentially to the half shell (10b) on which the closure member (19) is mounted.

6. The machine according to claim 1, wherein the thrust member (33) comprises a thrust element (34) insisting on a cup-shaped spring (35), a closure and adjusting member (36) of the cup-shaped spring (35) pretensioning being arranged on the opposite face of

7. The machine according to claim 1, wherein the cavity housing the thrust member (33) is a through hole (39) into which a thrust element (34') having a profile with a T-shaped section is introduced, the thrust element (34') comprising a first portion (40) with a lesser diameter and a second portion (41) with a larger diameter, which are connected by a shoulder (42), and wherein the through hole (39) has a narrowed section, into which the first portion (40) of the thrust element (34') inserts, and an enlarged section into which the second portion (41) of the thrust element (34') is housed, wherein the two sections form a shoulder (39a); and wherein a cup-shaped perforated spring (35) is arranged between the shoulder (42) of the thrust element (34') and the shoulder (39a) of the through hole (39).

8. The machine according to claim 1, wherein the thrust element (34, 34') has an end (34a) in contact with the pin (17), said end (34a) being in a semicylindrical shape so as to couple with the pin (17) outer surface.

9. The machine according to any of the claims 1 to 8, wherein said machine is a rotary machine.

10. The machine according to any of the claims 1 to 9, comprising a base (4) suitable to cooperate with the half shells (2a, 2b) for closing the mould (1) bottom, and vertical/translational moving means of the base, to cyclically form a closed cavity, suitable to receive a pre-heated preform and allow the expansion by blow-molding or stretch blow-molding of the preform into the cavity in order to obtain a bottle or container.

11. The machine according to any of the claims 1 to 10, wherein the half shells (2a, 2b) respectively comprise an outer face (5a, 5b) and an inner face (6a, 6b), respective interchangeable shaped portions (14a, 14b) being applied to the inner faces (6a, 6b), which, when considered as a whole, once the mould has been closed, repeat in negative the outer shape of the bottle to be obtained from the preform and defining the space within which the preform is expanded.

12. The machine according to any of the claims 1 to 11, wherein said abutment profiles (10a, 10b) are removable.

13. The machine according to any of the claims 6 to 12, wherein the hinge members (15, 15') are secured to the abutment profile (10b) outer surface by a screw system (18).

14. The machine according to any of the claims 1 to 13, wherein respective return springs (31) are associated to the upper and lower surfaces of the body (20) of the closure member (19), said return springs (31) comprising, at the two ends thereof, loops which allow the free coupling thereof with the body (20) at an end, and with the corresponding half shell (2b) at the other end.

## Patentansprüche

1. Maschine (1) zum Blasformen oder Dehn-Blasformen von Flaschen oder Behältern in einem Polymermaterial mit einer Mehrzahl von Formen (1), welche auf einem Transportsystem beweglich sind, wobei jede der Formen (1) eine erste Halbschale (2a) und eine zweite Halbschale (2b) umfasst, welche um eine Gelenkachse (3) angelenkt sind, wobei die Halbschalen (2a, 2b) an dem der Gelenkachse entgegengesetzten Ende einen Rand (9a, 9b) aufweisen, wobei die Ränder (9a, 9b) Anschlagprofile (10a, 10b) umfassen, wobei die nach außen weisende Fläche der Anschlagprofile (10a, 10b) eine vertikale Rippe (13a, 13b) umfasst, wobei an einer der beiden Halbschalen (2a, 2b) ein Verschlussteil (19) der Form (1) drehbar angelenkt ist, welches dazu geeignet ist, die Halbschalen (2a, 2b) während des Blasform- oder Dehn-Blasformverfahrens verbunden zu halten, wobei das Verschlussteil (19) einen Körper (20) umfasst, welcher ein C-förmiges Profil (21) aufweist, welches den Anschlagprofilen (10a, 10b) zugewandt ist, um lateral die vertikalen Rippen (13a, 13b) aufzunehmen, wobei das Verschlussteil (19) durch ein oder mehrere Gelenkteile (15, 15`) an dem Anschlagprofil (10b) angelenkt ist, **dadurch gekennzeichnet, dass** jedes der Gelenkteile (15, 15') ein Durchgangsloch (16), welches vertikal angeordnet ist und sich dazu eignet, einen Stift (17) aufzunehmen, und einen Hohlraum umfasst, welcher sich lotrecht zu dem Durchgangsloch (16) und in einer im Wesentlichen tangentialen Richtung in Bezug auf eine äußere Fläche des Anschlagprofils (10b) erstreckt, wobei der Hohlraum ein Druckteil (33) aufnimmt, welches dazu geeignet ist, den Stift (17) gegen die Wände des Durchgangslochs (16) gedrückt zu halten.

2. Maschine nach Anspruch 1, wobei das C-förmige Profil (21) eine ebene Bodenfläche (22) und zwei Seitenzähne umfasst, welche in einem solchen Abstand angeordnet sind, dass die jeweiligen inneren Seitenflächen (24) mit einem verringerten Zwischenraum außerhalb der Rippen (13a, 13b) angeordnet sind, um zu verhindern, dass die Halbschalen (2a, 2b) geöffnet werden.

3. Maschine nach Anspruch 1 oder 2, wobei ein Antriebsrad (25) leerlaufend an einer unteren Fläche des Körpers (20) montiert ist, wobei das Antriebsrad (25) dazu vorgesehen ist, zum Bewegen des Verschlussteils (19) zwischen einer Halbschalenverriegelungsstellung und einer Halbschalenentriegelungsstellung mit einem Nockenprofil (26) zu interagieren.

4. Maschine nach Anspruch 3, wobei das Nockenprofil (26) Teil einer Schwingnocke ist.

5. Maschine nach einem der Ansprüche 1 bis 4, wobei das Verschlussteil (19) ein Druckteil (33) umfasst, welches dazu geeignet ist, das C-förmige Profil (21) in Richtung und tangential zu der Halbschale (10b) zu drücken, an welcher das Verschlussteil (19) montiert ist.

6. Maschine nach Anspruch 1, wobei das Druckteil (33) ein Druckelement (34) umfasst, welches aus einer becherförmigen Feder (35) besteht, wobei ein Verschluss- und Einstellteil (36) einer Vorspanneinrichtung der becherförmigen Feder (35) an der entgegengesetzten Seite davon angeordnet ist.

7. Maschine nach Anspruch 1, wobei der Hohlraum, welcher das Druckteil (33) aufnimmt, ein Durchgangsloch (39) ist, in welches ein Druckelement (34') eingeführt ist, welches ein Profil mit einem T-förmigen Bereich aufweist, wobei das Druckelement (34') einen ersten Abschnitt (40) mit einem kleineren Durchmesser und einen zweiten Abschnitt (41) mit einem größeren Durchmesser umfasst, welche durch eine Schulter (42) verbunden sind, und wobei das Durchgangsloch (39) einen verengten Bereich, in welchen der erste Abschnitt (40) des Druckelements (34') eingefügt ist, und einen ausgeweiteten Bereich aufweist, in welchem der zweite Abschnitt (41) des Druckelements (34') aufgenommen ist, wobei die zwei Bereiche eine Schulter (39a) bilden; und wobei eine becherförmige, perforierte Feder (35) zwischen der Schulter (42) des Druckelements (34') und der Schulter (39a) des Durchgangslochs (39) angeordnet ist.

8. Maschine nach Anspruch 1, wobei das Druckelement (34, 34') ein mit dem Stift (17) in Kontakt befindliches Ende (34a) aufweist, wobei das Ende (34a) in einer halbzylindrischen Form vorliegt, sodass es mit einer äußeren Fläche des Stifts (17) gekoppelt ist.

9. Maschine nach einem der Ansprüche 1 bis 8, wobei die Maschine eine Rotationsmaschine ist.

10. Maschine nach einem der Ansprüche 1 bis 9, umfassend eine Basis (4), welche dazu geeignet ist, zum Schließen eines Bodens der Form (1) mit den Halbschalen (2a, 2b) zusammenzuwirken, und Vertikal-/Translations-Bewegungsmittel der Basis, um zyklisch einen geschlossenen Hohlraum zu bilden, welcher dazu geeignet ist, eine vorgewärmte Vorform aufzunehmen und die Ausdehnung durch ein Blasformen oder ein Dehn-Blasformen der Vorform in den Hohlraum zu ermöglichen, um eine Flasche oder einen Behälter zu erhalten.

11. Maschine nach einem der Ansprüche 1 bis 10, wobei die Halbschalen (2a, 2b) jeweils eine äußere Fläche (5a, 5b) und eine innere Fläche (6a, 6b) umfassen, wobei jeweilige austauschbar geformte Abschnitte (14a, 14b) an den inneren Flächen (6a, 6b) angebracht sind, welche, wenn als ein Ganzes betrachtet, sobald die Form geschlossen worden ist, in einer Negative die äußere Form der von der Vorform zu erhaltenden Flasche wiederholen, und den Raum definieren, innerhalb dessen die Vorform ausdehnt ist.

12. Maschine nach einem der Ansprüche 1 bis 11, wobei die Anschlagprofile (10a, 10b) abnehmbar sind.

13. Maschine nach einem der Ansprüche 6 bis 12, wobei die Gelenkteile (15, 15') durch ein Schraubensystem (18) an der äußeren Fläche des Anschlagprofils (10b) gesichert sind.

14. Maschine nach einem der Ansprüche 1 bis 13, wobei jeweilige Rückstellfedern (31) der oberen und der unteren Fläche des Körpers (20) des Verschlussteils (19) zugeordnet sind, wobei die Rückstellfedern (31) an den zwei Enden davon Ösen umfassen, welche das freie Koppeln davon mit dem Körper (20) an einem Ende und mit der entsprechenden Halbschale (2b) an dem anderen Ende ermöglichen.

## Revendications

1. Machine (1) pour le moulage par soufflage ou moulage par étirage-soufflage de bouteilles ou containers dans un matériau polymère ayant une pluralité de moules (1) qui sont mobiles sur un système de transport, dans laquelle chacun desdits moules (1) comprend une première demi-coque (2a) et une seconde demi-coque (2b) articulées autour d'un axe d'articulation (3), au niveau de l'extrémité opposée dudit axe d'articulation, lesdites demi-coques (2a, 2b) ayant un bord (9a, 9b), dans laquelle
lesdits bords (9a, 9b) comprennent des profils de butée (10a, 10b), la surface faisant face à l'extérieure desdits profils de butée (10a, 10b) comprenant une nervure verticale (13a, 13b), dans laquelle sur une des deux demi-coques (2a, 2b) est articulée de manière rotative un élément de fermeture (19) du moule (1), adapté pour maintenir les demi-coques (2a, 2b) assemblées pendant le processus de moulage par soufflage ou de moulage par étirage-soufflage, l'élément de fermeture (19) comprenant un corps (20) ayant un profil en forme de C (21) faisant face aux profils de butée (10a, 10b) de manière à contenir latéralement lesdites nervures verticales (13a, 13b),
dans laquelle ledit élément de fermeture (19) est articulé sur ledit profil de butée (10b) par un ou plusieurs éléments d'articulation (15, 15'), **caractérisée en ce que** chacun des éléments d'articulation (15, 15') comprend un trou traversant (16) agencé verticalement et adapté pour abriter une broche (17) et une cavité s'étendant perpendiculairement au trou traversant (16) et dans une direction sensiblement tangentielle par rapport à la surface extérieure du profil de butée (10b), dans laquelle ladite cavité abrite un élément de poussée (33) adapté pour maintenir ladite broche (17) appuyée contre les parois dudit trou traversant (16).

2. Machine selon la revendication 1, dans laquelle ledit profil en forme de C (21) comprend une surface inférieure plane (22) et deux dents latérales (23) agencées à une distance telle que les surfaces latérales intérieures respectives (24) sont agencées à l'extérieur des nervures (13a, 13b) avec un écartement réduit, afin de prévenir l'ouverture des demi-coques (2a, 2b).

3. Machine selon la revendication 1 ou 2, dans laquelle une roue d'entraînement (25) est montée à l'arrêt sur la surface inférieure du corps (20), la roue d'entraînement (25) étant destinée à interagir avec un profil de came (26) pour déplacer l'élément de fermeture (19) entre une position de verrouillage de demi-coque et une position de déverrouillage de demi-coque.

4. Machine selon la revendication 3, dans laquelle le profil de came (26) est une partie d'une came à bascule.

5. Machine selon l'une quelconque des revendications 1 à 4, dans laquelle ledit élément de fermeture (19) comprend un élément de poussée (33) adapté pour pousser le profil en forme de C (21) vers la demi-coque (10b) sur lequel est monté l'élément de fermeture (19) et de manière tangentielle à celle-ci.

6. Machine selon la revendication 1, dans laquelle l'élément de poussée (33) comprend un élément de poussée (34) appuyant sur un ressort forme de coupe (35), un élément de fermeture et d'ajustement (36) pour la prétention du ressort en forme de coupe (35) étant agencé sur la face opposée du ressort en forme de coupe (35).

7. Machine selon la revendication 1, dans laquelle la cavité abritant l'élément de poussée (33) est un trou traversant (39) dans lequel un élément de poussée (34') ayant un profil avec une section en forme de T est introduit, l'élément de poussée (34') comprenant une première partie (40) ayant un diamètre plus petit et une seconde partie (41) ayant un diamètre plus grand, qui sont connectées par un épaulement (42), et dans laquelle le trou traversant (39) à une section rétrécie, dans laquelle est insérée la première partie (40) de l'élément de poussée (34'), et une section élargie dans laquelle est abritée la seconde partie (41) de l'élément de poussée (34'), dans laquelle les deux sections forment un épaulement (39a) ; et dans laquelle un ressort perforé en forme de coupe (35) est agencé entre l'épaulement (42) de l'élément de poussée (34') et l'épaulement (39a) du trou traversant (39).

8. Machine selon la revendication 1, dans laquelle l'élément de poussée (34, 34') a une extrémité (34a) en contact avec la broche (17), ladite extrémité (34a) ayant une forme semi-cylindrique afin de se coupler avec la surface extérieure de la broche (17).

9. Machine selon l'une quelconque des revendications 1 à 8, dans laquelle ladite machine est une machine rotative.

10. Machine selon l'une quelconque des revendications 1 à 9, comprenant une base (4) adaptée pour coopérer avec les demi-coques (2a, 2b) pour fermer le fond du moule (1), et des moyens à déplacement vertical/translationnel de la base, pour former cycliquement une cavité fermée, adaptée pour recevoir une préforme préchauffée et permettre l'expansion par moulage par soufflage ou moulage par étirage-soufflage de la préforme dans la cavité afin d'obtenir une bouteille ou un container.

11. Machine selon l'une quelconque des revendications 1 à 10, dans laquelle les demi-coques (2a, 2b) comprennent respectivement une face extérieure (5a, 5b) et une face intérieure (6a, 6b), des parties formées interchangeables respectives (14a, 14b) étant appliquées aux faces intérieures (6a, 6b), qui, lorsque considérées dans leur globalité, une fois que le moule a été fermé, répètent en négatif la forme extérieure de la bouteille à obtenir à partir de la préforme et définissant l'espace à l'intérieur duquel est réalisée l'expansion de la préforme.

12. Machine selon l'une quelconque des revendications 1 à 11, dans laquelle lesdits profils de butée (10a, 10b) sont amovibles.

13. Machine selon l'une quelconque des revendications 6 à 12, dans laquelle les éléments d'articulation (15, 15') sont fixées à la surface extérieure du profil de butée (10b) par un système de vis (18).

14. Machine selon l'une quelconque des revendications 1 à 13, dans laquelle des ressorts de rappel respectifs (31) sont associés aux surfaces supérieure et inférieure du corps (20) de l'élément de fermeture (19), lesdits ressorts de rappel (31) comprenant, aux deux extrémités de ceux-ci, des boucles qui permettent le couplage libre de ceux-ci avec le corps (20) à une extrémité, et avec la demi-coque correspondante (2b) à l'autre extrémité.
